# EUROPÄISCHE PATENTSCHRIFT

(11) **EP 2 403 755 B1**
(45) Veröffentlichungstag und Bekanntmachung des Hinweises auf die Patenterteilung: **15.01.2014**
(21) Anmeldenummer: 10706593.0
(22) Anmeldetag: 23.02.2010
(51) Int. Cl.: B64C 1/06, F16B 5/00, B60R 13/02

(54) **VERBINDUNGSSYSTEM UND INSBESONDERE DAFÜR VORGESEHENES ADAPTERMODUL**
CONNECTION SYSTEM, AND ESPECIALLY ADAPTER MODULE PROVIDED THEREFOR
SYSTÈME D'ASSEMBLAGE ET MODULE ADAPTATEUR ASSOCIÉ

(30) Priorität: 05.03.2009 DE 102009012000
(43) Veröffentlichungstag der Anmeldung: 11.01.2012
(73) Patentinhaber: SFS Intec Holding AG, 9435 Heerbrugg (CH)
(72) Erfinder: COSTABEL, Sascha, 75443 Ötisheim (DE); SCHMIDT, Markus, 75391 Gechingen (DE)
(74) Vertreter: Schumacher & Willsau
(86) Internationale Anmeldenummer: PCT/EP2010/052274
(87) Internationale Veröffentlichungsnummer: WO 2010/100059

(56) Entgegenhaltungen:
- WO-A1-2007/068949
- WO-A1-2009/080643
- DE-A1-102004 062 264
- DE-A1-102007 030 422
- GB-A- 2 378 995

## Beschreibung

Die Erfindung betrifft die Verwendung eines Systems zum lösbaren Verbinden eines Ausstattungsteils wie einer Innenverkleidung einer Flugzeugkabine mit einer Tragstruktur wie einem Flugzeugrumpf, mit einem an der Tragstruktur befestigbaren Strukturhalter, mit einer einerseits an dem Strukturhalter und andererseits an dem Ausstattungsteil befestigbaren zweiteiligen Steckhalterung aus einem Verbindungsstift und einem Buchsenteil und wahlweise mit einer zwischen dem Buchsenteil der Steckhalterung und dem Strukturhalter angeordneten elektrischen Kontaktvorrichtung.

Bei der Kabinenenfinricklung von neueren Flugzeugtypen wie zum Beispiel dem Airbus A350 wird angestrebt, an dem Flugzeugrumpf zu befestigende Elemente wie Toiletten, Bordküchen, Fluggastsitze, Kabinennetzwerke, Kabinenbeleuchtung und Luftdüsen jeweils als ein komplettes Kabinenmodul zu konzipieren, wobei aber alle Verbindungsstellen als flexible standardisierte Schnittstellen ausgebildet sein sollen und wobei vereinfachte Befestigungskonzepte zum Einsatz kommen sollen, die eine Montage und Demontage ohne die Verwendung von Werkzeugen ermöglichen (vgl. den Aufsatz "Kabinenentwicklung - Neuer Ansatz für die A350 - Cabin Customisation", Zeitschrift One, deutsche Ausgabe, 18. Dezember 2006, S. 23). Außerdem soll es möglich sein, eine bestehende konfigurierte Lösung, zum Beispiel die Kabinenausstattung für einen Langstreckenflug, kurzfristig umkonfigurieren zu können, zum Beispiel die Kabinenausstattung für einen Kurzstreckenflug herrichten zu können. Die standardisierten Schnittstellen sollen dabei bei allen Flugzeugkategorien gleichermaßen anwendbar sein. Weiter soll dabei gewährleistet sein, dass die standardisierten Schnittstellen Klappergeräusche der miteinander verbundenen Bauteile sicher verhindern.

Ein System der eingangs genannten Art ist aus dem Dokument EP 1 193 403 A2 bekannt. Dieses bekannte System ist eine in X/Y-Koordinatenrichtung justierbare Platteneinheit für lösbar durch Federclips anzubringende Wandverkleidungselemente und besteht aus einer ersten, in X-Richtung justierbaren Basisplatte und einer zweiten, in Y-Richtung justierbaren Halteplatte. Die Basisplatte weist mindestens zwei in X-Richtung ausgerichtete, miteinander fluchtende erste Langlöcher auf zur gedachten, in X-Richtung justierbaren Befestigung der Basisplatte an einer Wand, bei der es sich um die Tragstruktur oder den Rumpf eines Flugzeuges handeln kann. Die Halteplatte weist mindestens zwei in Y-Richtung ausgerichtete, miteinander fluchtende zweite Langlöcher auf, durch welche die Basisplatte mit der in Y-Richtung justierbaren Halteplatte mittels Verbindungselementen verbunden ist. Auf der Halteplatte sind auf der der Basisplatte zugewandten Seite an den Eckpunkten eines in X/Y-Richtung ausgerichteten gedachten Rechtecks Haltefedern zur Aufnahme von Haltesteckbolzen angeordnet, welche die Verbindungsstifte einer Steckhalterung bilden und mit einem Wandverkleidungselement, bei dem es sich um einen Teil der Innenverkleidung eines Flugzeuges handeln kann, verbunden sind. Der Verbindungsstift oder Haltesteckbolzen ist über ein Dämpfungselement und einen gekröpften Verbindungsarm mit dem Wandverkleidungselement verbunden.

Wenn in einem Flugzeug ein Teil der Innenverkleidung wie zum Beispiel ein Panel, das Teile der elektrischen Ausrüstung tragen kann, aus der Decke oder der Innenwand wie eine Klappe herausgeschwenkt wird, müssen die Kabel, die mit den Ausrüstungsteilen an dem Panel verbunden sind, den Weg des Panels mitmachen. Damit die Kabel die Bewegung des Panels nicht behindern, müssen die an das Panel angeschlossenen Kabel eine gewisse Überlänge aufweisen. In einem Flugzeug, wo die Länge der eingebauten Kabel viele Kilometer misst, führen die vorgenannten Überkabellängen zu einem unerwünschten zusätzlichen Gewicht, das in der Größenordnung von mehreren hundert Kilogramm liegen kann. Wenn ein Panel von der Decke oder der Innenverkleidung zu lösen ist, ist es darüber hinaus erforderlich, elektrische Steckverbindungen zu trennen, die später bei dem Wiedereinbau des Panels wieder von Hand zusammengesteckt werden müssen.

Das Dokument DE 10 2006 012 730 B3 beschreibt ein Befestigungssystem zum Befestigen eines Kabinenausstattungselements an einer Tragstruktur eines Flugzeugs, mit dem sich die vorgenannten Probleme der Überkabellänge und des Herstellens und Auftrennens von Steckverbindungen teilweise lösen lassen sollen. Dazu wird von der Überlegung ausgegangen, die benötigten elektrischen Kontakte, die bei dem Abnehmen eines Teils der Innenverkleidung getrennt und später wieder verbunden werden müssen, in wenigstens eines von mehreren mechanischen Lagern, mit denen Tragstruktur und Innenverkleidung verbunden sind, zu integrieren, so dass beim Einkoppeln eine elektrische Verbindung mit mehreren Kontakten zwischen Tragstruktur und Innenverkleidung hergestellt wird. Bei diesem bekannten Befestigungssystem wird eine elektrische Kontaktvorrichtung mit einer Buchsenanordnung und einer Steckeranordnung in wenigstens einem Lager eines Ausstattungsteils ausgebildet, durch die eine elektrische Verbindung zwischen der Tragstruktur und der elektrischen Einrichtung des Kabinenausstattungsteils beim Fixieren dieses Lagers hergestellt wird.

Im vorstehend geschilderten Stand der Technik ist es üblich, ein System der eingangs genannten Art unmittelbar zwischen der Tragstruktur und dem Ausstattungsteil anzubringen, um diese lösbar miteinander zu verbinden. Wenn zusätzlich eine elektrische Kontaktvorrichtung der vorstehend genannten Art in die Steckhalterung integriert wird, muss dafür Sorge getragen werden, dass die zusätzliche Dicke der Kontaktvorrichtung sich nicht auf die gegenseitige Lage der Tragstruktur und des Ausstattungsteils auswirkt, die von vornherein festgelegt ist. Einen gewissen Ausgleich bietet die Möglichkeit, einen gekröpften Verbindungsarm, über den der Strukturhalter mit der Steckhalterung verbunden ist, in einer ersten oder in einer zweiten, um 180° um die Längsachse des Verbindungsarms gedrehten Stellung einsetzen zu können. Das ist Gegenstand einer gleichzeitig eingereichten weiteren Patentanmeldung der Anmelderin mit der Bezeichnung "Verbindungsvorrichtung". Häufig gibt es aber unabhängig von dem Einsatz einer elektrischen Kontaktvorrichtung Abstandsunterschiede zwischen der Tragstruktur und dem Ausstattungsteil, die wesentlich größer sind und ausgeglichen werden müssen. Weiter kann es je nach Einbausituation vorkommen, dass das Ausstattungsteil gegenüber der Tragstruktur eine bestimmte Winkellage einnehmen muss. Auch dafür bietet der vorstehend geschilderte Stand der Technik keine Ausgleichsmöglichkeit.

Das Dokument DE 10 2007 030 422 A1 beschreibt eine Halterung zur lösbaren Befestigung von Verkleidungsplatten in einem Luftfahrzeug. Zur Fixierung wird ein an der Verkleidungsplatte befestigter Haltebügel auf einen an einer Unterkonstruktion der Rumpfzelle befestigten Haltebolzen aufgerastet. Am Haltebolzen ist ein erster Halter zur Aufnahme von mindestens einem Verbindungselement befestigt, und auf dem Haltebügel ist in einer Gabelhalterung ein zweiter Halter verschiebbar aufgenommen. In den Halterungen sind jeweils zwei Verbindungselemente befestigt. Die Verbindungselemente sind als elektrische und/oder optische Buchsen bzw. Stecker mit jeweils angeschlossener Verkabelung ausgebildet. Durch das Verschwenken eines Kontaktierungshebels lässt sich der zweite Halter in Relation zu dem ersten Halter linear hin und her verschieben und in den ersten Halter zumindest teilweise einführen bzw. einstecken, wodurch mittels der Buchsen und der Stecker der endgültige elektrische und/oder optische Kontakt bereitgestellt wird. Wenn die Verkleidungsplatte auf den Haltebolzen aufgerastet ist, wird durch das Verschwenken des Kontaktierungshebels um ca. 90° der zweite Halter um einen Längenbetrag von bis zu 15 mm linear verschoben, was für eine ausreichende Kontaktgabe zwischen den Verbindungselementen ausreichend ist. Hierdurch werden die Stecker jeweils in die korrespondierenden Buchsen eingeführt und der im Allgemeinen elektrische und/oder der optische Kontakt hergestellt, wobei die Halterung aus einer Trennposition in eine Verbindungsposition übergeht. Der Kontaktierungshebel steht in der Trennposition über eine Oberseite der Verkleidungsplatte in etwa senkrecht hinweg. Hierdurch ist es möglich, mit einem Blick zu erkennen, ob die Verkabelung unterhalb der Verkleidungsplatte ordnungsgemäß über die Stecker sowie die Buchsen angeschlossen ist. Ein Winkel- und Höhenausgleich zwischen Unterkonstruktion und Verkleidungsplatten ist in diesem Dokument nicht angesprochen.

Aus dem Dokument DE 10 2004 062 264 A1 ist ein Bauelement, insbesondere für den Leichtbau, mit einer flächigen Ausdehnung und zueinander benachbart angeordneten Hohlformelementen beschrieben, die sich quer zur flächigen Ausdehnung erstrecken. Die Hohlformelemente weisen jeweils eine durchgehend umlaufende Seitenwand auf. Die zueinander benachbarten Hohlformelemente sind an ihren Seitenwänden miteinander verbunden. Zwei Abstandsformteile sind vorgesehen, die sich parallel zur flächigen Ausdehnung des Bauelements erstrecken und Anordnungen der Hohlformelemente bilden. Jedes der Abstandsformteile weist eine Basisschicht auf, auf der die zu dem Abstandsformteil gehörenden Hohlformelemente mit gegenseitigen Abständen und mit entgegengesetzter Orientierung angeordnet sind, so dass die Hohlformelemente des ersten Abstandsformteils in Abstände zwischen den Hohlformelementen des zweiten Abstandsformteils ragen.

Das Dokument WO 2007/068949 A1 beschreibt ein Verfahren zum Herstellen eines Flugzeugbauteils durch Aufbringen einer Beilage auf eine erste Fläche eines ersten Teils, Platzieren der ersten Fläche des Teils benachbart zu einer zweiten Fläche eines zweiten Teils, Einfügen einer festen Beilage in einen Spalt zwischen der ersten und der zweiten Fläche und Festhalten der Beilage in der eingeführten Position und anschließendes Einbringen einer flüssigen Beilage durch das erste Teil hindurch in ein Gebiet zwischen dem ersten Teil und der festen Beilage.

Das Dokument GB 2 378 995 A befasst sich mit einem Verbundmaterial und einem Verfahren zum Herstellen einer Beilage aus dem Verbundmaterial. Zum Herstellen der Beilage wird ein Trennpapier von dem Material entfernt, so dass sich das Material mit einem ersten Bauteil verkleben lässt. Ein zweites Bauteil wird dann in eine gewünschte Position an einem weiteren Trennpapier des Materials gebracht. Das Beilagenmaterial wird dann in veränderlichem Ausmaß zusammengedrückt, abhängig von den Konturen der Oberflächen der beiden Bauteile, zwischen denen das Material eingelegt ist. Das Material härtet dann unter Druck aus. Nachdem das Material ausgehärtet ist, kann das zweite Bauteil entfernt werden, damit die Beilage weiter bearbeitet werden kann. Dieses Dokument lehrt somit, eine Lücke oder einen Zwischenraum zwischen zwei Bauteilen unabhängig von der Kontur der sich gegenüberliegenden Anschlussflächen der Bauteile mit einem aushärtbaren Material auszufüllen, dann Druck auszuüben, das Material aushärten zu lassen und schließlich das ausgehärtete Material zur weiteren Bearbeitung zu entnehmen. Es liegt auf der Hand, dass dieses Verfahren zum Herstellen einer Beilage nur anwendbar ist, wenn die Möglichkeit besteht, zunächst ein aushärtbares Material zwischen zwei Bauteilen einzubringen, dieses Material zwischen den beiden Bauteilen zusammenzudrücken, aushärten zu lassen, dann fertig zu bearbeiten und schließlich wieder zwischen die beiden Bauteile einzusetzen.

Aufgabe der Erfindung ist es, ein System der eingangs genannten Art so auszubilden bzw. zu verwenden, dass auf einfache Weise ein Winkel- und Höhenausgleich zwischen Tragstruktur und Ausstattungsteil ermöglicht wird.

Erfindungsgemäß wird das bei einem System der eingangs genannten Art durch ein zwischen dem Ausstattungsteil und der Steckhalterung angebrachtes Adaptermodul zum Winkel- und Höhenausgleich zwischen dem Ausstattungsteil und der Tragstruktur erreicht, wobei das Adaptermodul ein Block aus einem festen Material mit einer ersten Anschlussfläche für die Steckhalterung und mit einer zweiten Anschlussfläche für das Ausstattunasteil ist und wobei eine wahlweise gegenseitige Winkelorientierung und ein wahlweiser gegenseitiger Abstand der Anschlussflächen den Winkel- und Höhenausgleich ergeben. Das bei dem System nach der Erfindung eingesetzte Adaptermodul kann in verschiedenen Größen und in verschiedenen Ausbildungen als quader- oder winkelförmiges Teil bereitgehalten werden, um je nach erforderlichem Winkel- und Höhenausgleich eingesetzt werden zu können. Dabei werden die gegenseitige Winkelorientierung und der gegenseitige Abstand der Anschlussflächen entsprechend dem erforderlichen Winkel- und Höhenausgleich vorab gewählt. Das gesamte Verbindungssystem zwischen Tragstruktur und Ausstattungsteil ist aus Modulen aufbaubar, denn auch der Strukturhalter, die wahlweise einsetzbare elektrische Kontaktvorrichtung und die Steckhalterung können jeweils als Module und in wahlweise unterschiedlicher Größe bereitgehalten werden. um gemeinsam mit dem Adaptermodul die erforderliche Verbindung zwischen der Tragstruktur und dem Ausstattungsteil mit dem gegebenenfalls erforderlichen Winkel- und Höhenausgleich herstellen zu können. Das Adaptermodul des Systems nach der Erfindung ist ein Block aus einem festen Material mit der ersten Anschlussfläche für die Steckhalterung und mit der zweiten Anschlussfläche für das Ausstattungsteil. Diese Ausbildung des Adaptermoduls erlaubt es, auf einfache und wirtschaftliche Weise verschiedene Größen von Adaptermodulen. deren Anschlussflächen wahlweise beabstandet und gegeneinander geneigt sind, für den Einsatz bei dem System nach der Erfindung auf Lager zu halten.

Vorteilhafte Ausgestaltungen der Verwendung der Erfindung bilden die Gegenstände der abhängigen Ansprüche.

In einer Ausgestaltung des Systems sind wenigstens in die erste Anschlussfläche Befestigungsmittel für die Steckhalterung eingelassen. Das können beispielsweise Gewindebuchsen sein, so dass das Buchsenteil der Steckhalterung mit dem Adaptermodul durch Schrauben verbindbar ist.

In einer weiteren Ausgestaltung des Systems ist das Adaptermodul so ausgebildet, dass es mit seiner zweiten Anschlussfläche auf dem Ausstattungsteil befestigbar ist. Hierfür ist es ebenfalls möglich, in die zweite Anschlussfläche Befestigungsmittel einzulassen, so dass das Ausstattungsteil durch Schrauben mit dem Adaptermodul verbunden werden kann.

In einer weiteren Ausgestaltung des Systems ist das Adaptermodul so ausgebildet, dass es mit seiner zweiten Anschlussfläche versenkt in dem Ausstattungsteil befestigbar ist. Da die Einsenktiefe und der Winkel des Adaptermoduls gegenüber dem Ausstattungsteil relativ frei wählbar sind, lässt sich die Anzahl an unterschiedlichen Adaptermodulen, die auf Lager zu halten sind, erheblich verringern.

In einer weiteren Ausgestaltung des Systems ist das Adaptermodul so ausgebildet, dass es in einem als Leichtbaupanel ausgebildeten Ausstattungsteil nach dem "Crushed core"-Verfahren befestigbar ist. Das "Crushed core"-Verfahren ist beispielsweise aus der DE 10 2004 062 264 A1 bekannt. Dieses Verfahren ermöglicht eine besonders wirtschaftliche Art der Verbindung zwischen Adaptermodul und Ausstattungsteil. Bei einem als Leichtbaupanel ausgebildeten Ausstattungsteil besteht das eigentliche Panel aus einem Sandwich aus einer inneren Wabe und äußeren Deckplatten. Bei der Fertigung des Ausstattungsteils wird das Rohsandwich unter Druck und Temperatur in Form gebracht und an verlangten Stellen auch in der Dicke minimiert ("gecrushed"). Dieses Verfahren bietet die Möglichkeit, Bauteile wie das Adaptermodul passgenau in das Werkzeug einzulegen, damit diese Bauteile bei dem anschließenden Pressvorgang mit dem Leichtbaupanel vereinigt werden.

Ausführungsbeispiele der Verwendung der Erfindung werden im Folgenden unter Bezugnahme auf die Zeichnungen näher beschrieben. Es zeigt
- Fig. 1: in Seitenansicht eine erste Ausführungsform eines erfindungsgemäßen Systems zum lösbaren Verbinden eines Ausstattungsteils, zum Beispiel der Innenverkleidung einer Flugzeugkabine, mit einer Tragstruktur, zum Beispiel einem Flugzeugrumpf,
- Fig. 2: das System nach Fig. 1 in einer perspektivischen Darstellung, wobei der Ubersichtlichkeit halber die Tragstruktur weggelassen worden ist,
- Fig. 3: ein System wie in Fig. 2 in einer auseinandergezogenen Darstellung,
- Fig. 4: ein erstes Ausführungsbeispiel der Verbindung eines Adaptermoduls des Systems nach der Erfindung mit einem Ausstattungsteil,
- Fig. 5: ein zweites Ausführungsbeispiel der Verbindung eines Adaptermoduls des Systems nach der Erfindung mit einem als Leichtbaupanel ausgebildeten Ausstattungsteil und
- Fig. 6: ein drittes Ausführungsbeispiel der Verbindung eines Adaptermoduls des Systems nach der Erfindung mit einem als Leichtbaupanel ausgebildeten Ausstattungsteil.

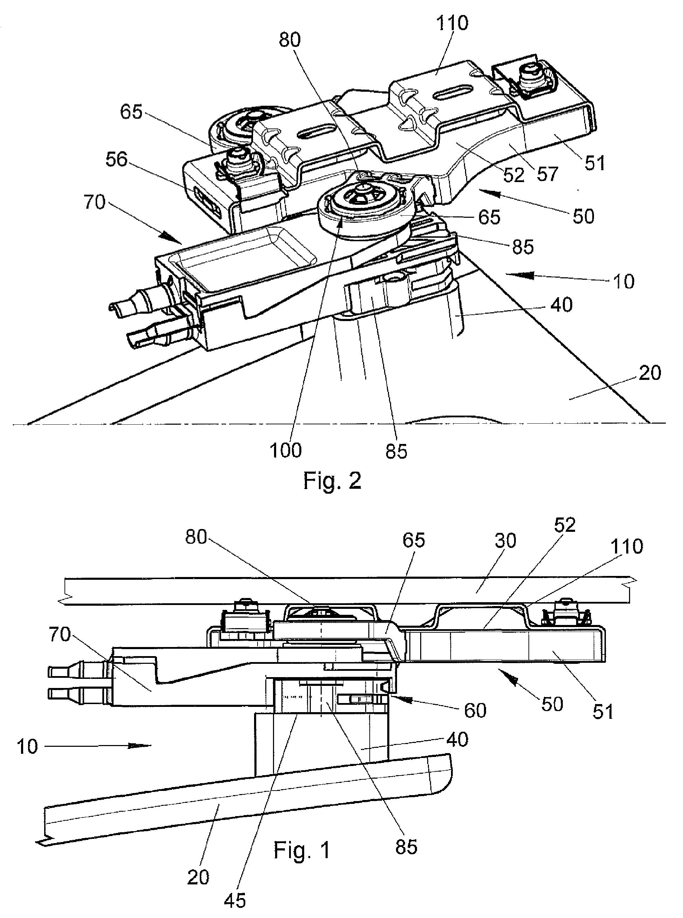

Eine erste Ausführungsform eines Systems nach der Erfindung, das insgesamt mit 10 bezeichnet ist, ist in Fig. 1 in Seitenansicht und in Fig. 2 in perspektivischer Darstellung in einer Ansicht schräg von oben gezeigt. Das System 10 dient zum lösbaren Verbinden eines Ausstattungsteils 20 mit einer (nur in Fig. 1 angedeuteten) Tragstruktur 30. Das Ausstattungsteil 20 kann die Innenverkleidung einer Flugzeugkabine sein, wobei dann die Tragstruktur 30 der Flugzeugrumpf ist. Das System 10 umfasst einen an der Tragstruktur 30 befestigbaren Strukturhalter 50 (im Englischen als structure bracket bezeichnet) mit wenigstens einem gekröpften Verbindungsarm 65. Der Verbindungsarm 65 ist an eine in den Figuren insgesamt mit 60 bezeichnete Steckhalterung angeschlossen. Die Steckhalterung 60, die zweiteilig ausgebildet ist, umfasst einen Verbindungsstift 80 und ein Buchsenteil 85. Zwischen dem Verbindungsarm 65 und dem Buchsenteil 85 der Steckhalterung 60 ist eine elektrische Kontaktvorrichtung angeordnet, die in den Fig. 1 - 3 insgesamt mit 70 bezeichnet ist. Die Steckhalterung 60 verbindet das Ausstattungsteil 20 über den Verbindungsarm 65 lösbar mit dem Strukturhalter 50, der seinerseits durch einen Bügel 110 aus Metall oder, bevorzugt, aus einem Kohlefaserwerkstoff an der Tragstruktur 30 lösbar befestigt ist. Der Bügel 110 ist auf einer Oberseite 52 eines Körpers 51 des Strukturhalters 50 befestigt. Der Bügel 110 ist an seinen Enden so abgewinkelt, dass er sich über Stirnseiten 54 und 56 des Körpers 51 erstreckt. Vorsprünge an den Stirnseiten 54, 56 sind in entsprechende Öffnungen in den Endseiten des Bügels 110 eingeclipst. Zwischen dem Ausstattungsteil 20 und dem Buchsenteil 85 der Steckhalterung 60 ist ein an dem Ausstattungsteil 20 anbringbares oder angebrachtes Adaptermodul 40 zum Winkel- und Höhenausgleich zwischen dem Ausstattungsteil 20 und der Tragstruktur 30 angeordnet.

Der Strukturhalter 50 ist ein flacher, plattenförmiger, mehreckiger Körper 51 mit paarweise einander gegenüberliegenden Seiten 57, 58 und den oben bereits erwähnten Stirnseiten 54, 56. Jeder Verbindungsarm 65 ist ein gesondertes Teil, das in einer ersten Stellung oder in einer zweiten, um 180° um seine Längsachse gedrehten Stellung in den Strukturhalter 50 eingesteckt und darin lösbar verriegelt werden kann. Je nach dem, ob eine elektrische Kontaktvorrichtung 70 vorhanden ist oder nicht, wird die eine oder die andere Stellung des Verbindungsarms 65 gewählt. Der Körper 51, das Buchsenteil 85 und die Verbindungsarme 65 bestehen zweckmäßig aus Kunststoff, der mit Glas- oder Kohlefaser verstärkt sein kann, oder aus irgendeinem anderen in der Flugzeugtechnik üblichen Werkstoff.

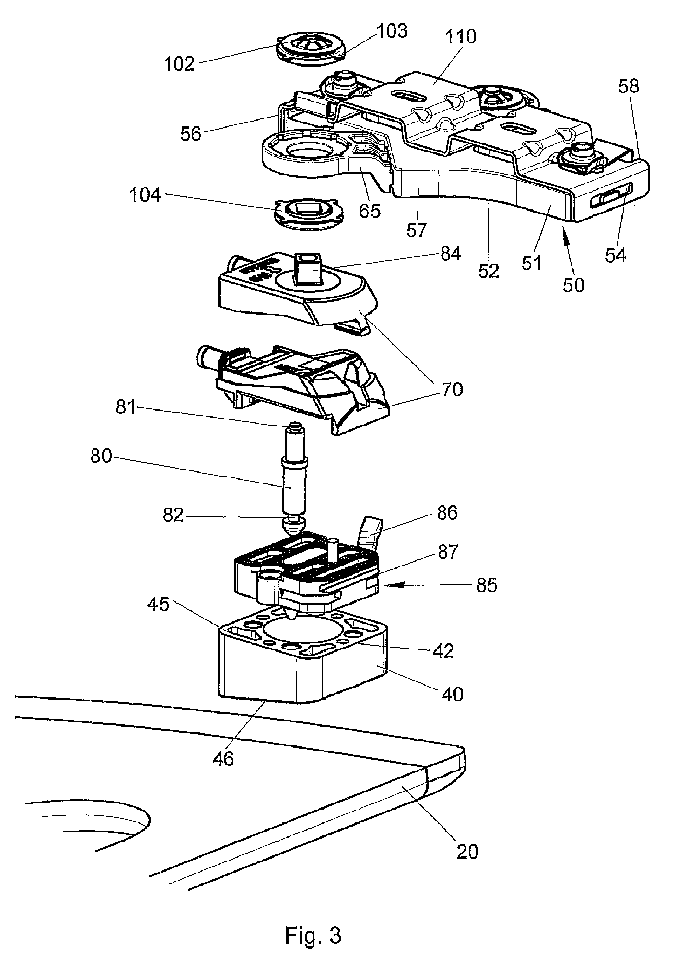

Die Steckhalterung 60, die in Fig. 3 in auseinander gezogener Darstellung gezeigt ist, umfasst das Buchsenteil 85 und den darin lösbar arretierbaren Verbindungsstift 80. Das Buchsenteil 85 der Steckhalterung 60 weist ein Gehäuse 87 auf, welches einen federvorgespannten Schieber (in den Zeichnungen nicht sichtbar) enthält. Der Schieber ist durch das Einführen des Verbindungsstiftes 80 der Steckhalterung 60 auslenkbar. An dem Gehäuse 87 des Buchsenteils 85 ist ein Exzenterhebel 86 zum manuellen Betätigen, also zum Beispiel zum Lösen des federvorgespannten Schiebers angebracht. Der Verbindungsstift 80 hat an seinem in Fig. 3 unteren Ende eine Nut 82, in die der Schieber einrasten kann. Der Verbindungsstift 80 hat an seinem entgegengesetzten Ende eine Nut 81, in die federnde Arme einer Anschlagscheibe 102 eines Dämpfungselements 100 einrasten können. Die Anschlagscheibe 102 hält gemeinsam mit einer Anschlagscheibe 104 des Dämpfungselements 100 den Verbindungsarm 65 an dem oberen Ende des Verbindungsstiftes 80 fest.

Die elektrische Kontaktvorrichtung 70 ist ebenfalls zweiteilig ausgebildet, wie es in der auseinandergezogen Darstellung in Fig. 3 zu erkennen ist. Die Kontaktvorrichtung 70 hat elektrische Kontakte (nicht sichtbar), die in Richtung der Längsachse des Verbindungsstiftes 80 miteinander verbindbar und voneinander trennbar sind. Die obere Hälfte der Kontaktvorrichtung 70 trägt eine Buchse 84, die außen quadratisch ausgebildet ist und in eine quadratische Öffnung der Anschlagscheibe 104 passt. Innen hat die Buchse 84 eine Bohrung, in die der Verbindungsstift 80 einführbar ist, bis er mit seinem oberen Ende an einer Schulter der Buchse 84 anliegt und mit der Nut 81 aus der Buchse 84 hervorsteht, damit die federnden Arme der Anschlagscheibe 102 in die Nut 81 einrasten können. Falls keine elektrische Kontaktvorrichtung 70 verwendet und der Verbindungsarm 65 somit in einer gegenüber der Darstellung in Fig. 3 um 180° um seine Längsachse gedrehten Stellung eingesetzt wird, wird statt des in Fig. 3 dargestellten Verbindungsstiftes 80 ein entsprechend kürzerer Verbindungsstift verwendet.

Die Fig. 1 - 3 zeigen das zwischen dem Ausstattungsteil 20 und der Steckhalterung 60 angeordnete Adaptermodul 40. Das Adaptermodul 40 ist ein Block aus einem festen Material mit einer ersten, in Fig. 3 oberen Anschlussfläche 45 für die Steckhalterung 60 und mit einer zweiten, in Fig. 3 unteren Anschlussfläche 46 für das Ausstattungsteil 20. Das vorgenannte feste Material kann ebenfalls mit Glas- oder Kohlefaser verstärkter Kunststoff oder irgendein anderes in der Flugzeugtechnik im Hinblick auf die Leichtbauweise übliches Material sein. Das Adaptermodul 40 ermöglicht, die erforderliche Verbindung zwischen der Tragstruktur 30 und dem Ausstattungsteil 20 mit einem gegebenenfalls erforderlichen Winkel- und Höhenausgleich herstellen zu können, damit die Tragstruktur 30 und das Ausstattungsteil 20 bei ihrer gegenseitigen Befestigung einen vorgegebenen gegenseitigen Abstand und eine vorgegebene gegenseitige Winkelorientierung erhalten. Bei dem in Fig. 1 dargestellten Ausführungsbeispiel des erfindungsgemäßen Systems 10 ist das Ausstattungsteil 20 gegen die Tragstruktur 30 geneigt. Der Neigungswinkel ergibt sich durch die entsprechende gegenseitige Winkelorientierung der beiden Anschlussflächen 45, 46 des Adaptermoduls 40.

Es können Adaptermodule 40 mit unterschiedlich gegeneinander geneigten Anschlussflächen 45, 46 auf Lager gehalten werden, damit bei Bedarf die vorgegebene Winkelorientierung zwischen dem Ausstattungsteil 20 und der Tragstruktur 30 erzielt werden kann.

Zusätzliche Möglichkeiten für das Erzielen der vorgegebenen Winkelorientierung zwischen dem Ausstattungsteil 20 und der Tragstruktur 30 ergeben sich durch die Art der Verbindung des Adaptermoduls 40 mit dem Ausstattungsteil 20. In dem in Fig. 1 gezeigten Ausführungsbeispiel ist das Adaptermodul 40 mit seiner zweiten Anschlussfläche 46 auf dem Ausstattungsteil 20 befestigt. Zu diesem Zweck sind bei dem vorgenannten Ausführungsbeispiel in die Anschlussflächen 45, 46 Befestigungsmittel 42 für die Steckhalterung 60 bzw. das Ausstattungsteil 20 eingelassen, beispielsweise Gewindebuchsen, so dass das Buchsenteil 85 der Steckhalterung 100 und ebenso das Ausstattungsteil 20 mit dem Adaptermodul 40 durch Schrauben (nicht dargestellt) verbindbar ist.

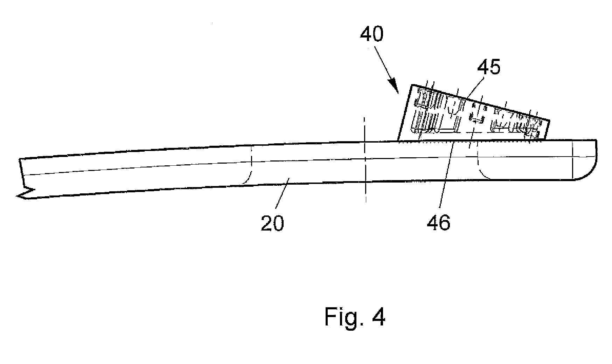

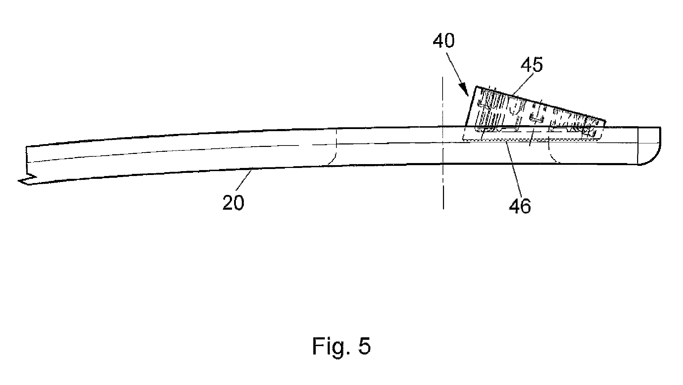

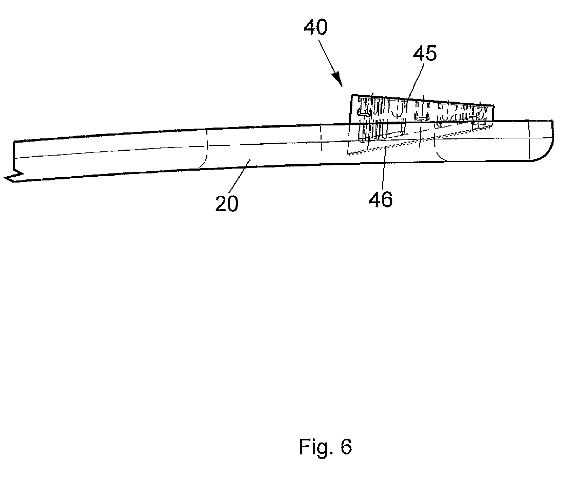

Die Fig. 4 - 6 zeigen weitere Ausführungsbeispiele für die Art der Ausbildung des Adaptermoduls 40 und für die Art und Weise der Befestigung des Adaptermoduls 40 an dem Ausstattungsteil 20. Bei dem Ausführungsbeispiel nach Fig. 4 ist das Adaptermodul 40 auf dem Ausstattungsteil 20 befestigt. Die erste Anschlussfläche 45 ist gegen die Oberseite des Ausstattungsteils 20 geneigt. Bei dem Ausführungsbeispiel nach Fig. 5 ist das Ausstattungsteil 20 ein Leichtbaupanel, in das das Adaptermodul 40 teilweise so eingelassen ist, dass die zweite Anschlussfläche 46 zu der Oberseite des Ausstattungsteils 20 etwa parallel ist. Bei dem Ausführungsbeispiel nach Fig. 6 ist das Adaptermodul 40 in das ebenfalls als Leichtbauplatte ausgebildete Ausstattungsteil 20 so eingelassen, dass die zweite Anschlussfläche 46 gegenüber der Oberseite des Ausstattungsteils 20 abgewinkelt ist. Die Ausführungsbeispiele nach den Fig. 4 - 6 zeigen, dass zusätzlich durch die Art der Verbindung des Adaptermoduls 40 mit dem Ausstattungsteil 20 unterschiedliche Höhen und Winkelorientierungen für die erste Anschlussfläche 45 erzielbar sind. Eingangs ist bereits beschrieben worden, dass die Befestigung des Adaptermoduls 40 an einem als Leichtbaupanel ausgebildeten Ausstattungsteil 20 nach dem bekannten "Crushed core"-Verfahren erfolgen kann. Das Leichtbaupanel, das aus einem Sandwich aus einem inneren Wabe und äußeren Deckplatten besteht, wird bei der Herstellung in der Dicke minimiert und gleichzeitig durch Einpressen des Adaptermoduls 40 in der verlangten Winkelorientierung fest mit demselben verbunden.

Das Adaptermodul 40 kann, wie gesagt, als ein gesondertes Teil auf Lager gehalten werden, das entsprechende Abstufungen des gegenseitigen Abstands und der gegenseitigen Winkelorientierung der Anschlussflächen 45, 46 aufweist. Der Lagerhaltungsaufwand lässt sich dadurch verringern, dass gemäß den Ausführungsbeispielen nach den Fig. 5 und 6 das Adaptermodul 40 in dem Ausstattungsteil 20 unterschiedlich tief versenkt wird und mit dem Ausstattungsteil 20 unterschiedlich geneigt verbunden wird.

### Bezugszeichenliste

- 10: System
- 20: Ausstattungsteil
- 30: Tragstruktur
- 40: Adaptermodul (connector bracket)
- 42: Befestigungsmittel
- 45: erste Anschlussfläche
- 46: zweite Anschlussfläche
- 50: Strukturhalter (structure bracket)
- 51: Körper
- 52: Oberseite
- 54: Stirnseite
- 56: Stirnseite
- 57: Seite
- 58: Seite
- 60: Steckhalterung
- 65: Verbindungsarm
- 70: elektrische Kontaktvorrichtung
- 80: Verbindungsstift
- 82: Nut
- 84: Buchse
- 85: Buchsenteil
- 86: Exzenterhebel
- 87: Gehäuse
- 100: Dämpfungselement
- 102: Anschlagscheibe
- 104: Anschlagscheibe
- 110: Bügel

## Patentansprüche

1. Verwendung eines Systems (10) zum lösbaren Verbinden einer Innenverkleidung (20) einer Flugzeugkabine mit einem Flugzeugrumpf (30),
wobei das System (10) einen an dem Flugzeugrumpf (30) befestigbaren Strukturhalter (50),
eine einerseits an dem Strukturhalter (50) und andererseits an der Innenverkleidung (20) befestigbare zweiteilige Steckhalterung (60) aus einem Verbindungsstift (80) und einem Buchsenteil (85) und
wahlweise eine zwischen dem Buchsenteil (85) der Steckhalteruna (60) und dem Strukturhalter (50) angeordnete elektrische Kontaktvorrichtung (70) aufweist,
**gekennzeichnet durch** ein zwischen der Innenverkleidung (20) und der Steckhalterung (60) angebrachtes Adaptermodul (40) für einen Winkel- und Höhenausgleich zwischen der Innenverkleidung (20) und dem Flugzeugrumpf (30)
wobei das Adaptermodul (40) ein Block aus einem festen Material mit einer ersten Anschlussfläche (45) für die Steckhalterung (60) und mit einer zweiten Anschlussfläche (46) für die Innenverkleidung (20) ist,
wobei eine gegenseitige Winkelorientierung und ein gegenseitiger Abstand der Anschlussflächen (45, 46) des Adaptermoduls (40) zu dem Winkel- und Höhenausgleich beitragen und
wobei weiter die Innenverkleidung (20) als ein Leichtbaupanel ausgebildet ist, auf dem das Adaptermodul (40) mit seiner zweiten Anschlussfläche (46) befestigbar ist, und als eine zusätzliche Möglichkeit zu dem Erzielen einer vorgegebenen Winkelorientierung das Adaptermodul (40) mit seiner zweiten Anschlussfläche (46) unterschiedlich tief versenkt in dem Leichtbaupanel und unterschiedlich geneigt zu dem Leichtbaupanel mit diesem verbindbar ist.

2. Verwendung nach Anspruch 1, **dadurch gekennzeichnet, dass** wenigstens in die erste Anschlussfläche (45) Befestigungsmittel (42) für die Steckhalterung (60) eingelassen sind.

3. Verwendung nach Anspruch 1 oder 2, **dadurch gekennzeichnet, dass** das Leichtbaupanel durch Pressen formbar und dabei das Adaptermodul (40) durch Einpressen in das Leichtbaupanel in dieses einsenkbar und so mit diesem in einer verlangten Winkelorientierung und Einsenktiefe verbindbar ist.

4. Verwendung nach Anspruch 3, **dadurch gekennzeichnet, dass** das Verbinden des Adaptermoduls (40) mit dem Leichtbaupanel nach dem "Crushed core"-Verfahren erfolgt.

## Claims

1. Use of a system (10) for releasably connecting an interior panelling (20) of an aircraft cabin to an aircraft fuselage (30),
wherein the system (10) has a structural holder (50) which can be fastened to the aircraft fuselage (30),
a two-piece plug-in mounting (60) which can be fastened, on the one hand, to the structural holder (50) and, on the other hand, to the interior paneling (20) and which comprises a connecting pin (80) and a socket member (85), and
optionally has an electrical contact device (70) disposed between the socket member (85) of the plug-in mounting (60) and the structural holder (50),
**characterised by** an adapter module (40) mounted between the interior panelling (20) and the plug-in mounting (60) for compensating the angular and vertical position between the interior panelling (20) and the aircraft fuselage, wherein the adapter module (40) is a block of a solid material with a first connection surface (45) for the plug-in mounting (60) and with a second connection surface (46) for the interior panelling (20), wherein mutual angular orientation and mutual spacing of the connection surfaces (45,46) of the adapter module (40) contribute to the angular and vertical compensation, and
wherein further the interior panelling (20) is in the form of a light-weight panel, on which the adapter module (40) can be fastened with its second connection surface (46), and, as an additional possibility to achieve a predetermined angular orientation, the adapter module (40) can be connected with its second connection surface (46) to the light-weight panel recessed at different depths in the light-weight panel and at different inclinations relative thereto.

2. Use according to Claim 1, **characterised in that** fastening means (42) for the plug-in mounting (60) are recessed at least into the first connection surface (45).

3. Use according to Claim 1 or 2, **characterised in that** the light-weight panel can be formed by stamping and then the adapter module (40) can be recessed into the light-weight panel by being pressed into it and can thus be connected thereto at the desired angular orientation and recessing depth.

4. Use according to Claim 3, **characterised in that** the connection of the adapter module (40) to the light-weight panel is carried out using the "crushed core" process.

## Revendications

1. Utilisation d'un système (10) pour la liaison amovible d'un habillage interne (20) d'une cabine d'avion avec un fuselage d'avion (30), ce système (10) comprenant un support de structure (50) pouvant être fixé au fuselage (30) de l'avion, un support enfichable en deux parties (60) pouvant être fixé d'une part au support de structure (50) et d'autre part à l'habillage interne (20), et constitué par une tige de liaison (80) et une partie de douille (85), et le cas échéant un dispositif de contact électrique (70) monté entre l'élément de douille (85) du support enfichable (60) et le support de structure (50),
**caractérisée par**
un module adaptateur (40) monté entre l'habillage interne (20) et le support enfichable (60) pour permettre un alignement angulaire et en hauteur de l'habillage interne (20) et du fuselage de l'avion, ce module adaptateur (40) étant constitué par un bloc en un matériau rigide comportant une première surface de liaison (45) pour le support enfichable (60) et une seconde surface de liaison (46) pour l'habillage interne (20), l'orientation angulaire et l'écartement réciproque des surfaces de liaison (45, 46) du module adaptateur (40) contribuant à l'alignement angulaire et en hauteur, et en outre l'habillage interne (20) étant réalisé sous la forme d'un panneau léger sur lequel peut être fixé le module adaptateur (40) par se seconde surface de liaison (46), et, en tant que possibilité supplémentaire d'obtention d'une orientation angulaire prédéfinie, le module adaptateur (40) peut être relié au panneau de construction léger par sa seconde surface de liaison (46) en étant enfoncé à différentes profondeurs dans ce panneau et en étant incliné différemment par rapport à celui-ci.

2. Utilisation conforme à la revendication 1,
caractérisé en que qu'
au moins dans la première surface de liaison (45) sont montés des moyens de fixation (42) du support enfichable (60).

3. Utilisation conforme à la revendication 1 ou 2,
**caractérisée en ce que**
le panneau de construction léger peut être déformé par compression et ainsi le module adaptateur (40) peut être enfoncé dans ce panneau par compression dans celui-ci et donc relié à celui-ci avec une orientation angulaire et une profondeur d'enfoncement augmentées.

4. Utilisation conforme à la revendication 3,
**caractérisée en ce que**
la liaison du module adaptateur (40) avec le panneau de construction léger est effectué selon le procédé « Crushed core » (à noyau écrasé).
